Europäisches Patentamt

European Patent Office

Office européen des brevets

(19)

(11) **EP 1 550 955 A1**

(12) **EUROPEAN PATENT APPLICATION**
published in accordance with Art. 158(3) EPC

(43) Date of publication:
06.07.2005 Bulletin 2005/27

(51) Int Cl.⁷: **G06F 17/30**

(21) Application number: 03710335.5

(22) Date of filing: 13.03.2003

(86) International application number:
**PCT/JP2003/002997**

(87) International publication number:
**WO 2004/081821 (23.09.2004 Gazette 2004/39)**

(84) Designated Contracting States:
**AT BE BG CH CY CZ DE DK EE ES FI FR GB GR HU IE IT LI LU MC NL PT RO SE SI SK TR**

(71) Applicant: **FUJITSU LIMITED**
**Kawasaki-shi, Kanagawa 211-8588 (JP)**

(72) Inventors:
• **KOBAYASHI, Tetsushi, G-SEARCH LIMITED**
**Minato-ku, Tokyo 108-0022 (JP)**

• **ODA, Toshihiko, G-SEARCH LIMITED**
**Minato-ku, Tokyo 108-0022 (JP)**
• **IMAJIMA, Yoshiaki, G-SEARCH LIMITED**
**Minato-ku, Tokyo 108-0022 (JP)**

(74) Representative: **Hitching, Peter Matthew**
**Haseltine Lake,**
**Imperial House,**
**15-19 Kingsway**
**London WC2B 6UD (GB)**

(54) **ARTICLE DATA SEARCH SERVER, ARTICLE DATA SEARCH METHOD, ARTICLE DATA SEARCH PROGRAM AND ARTICLE DATA SEARCH TERMINAL DEVICE**

(57)     When a search request for requesting a search with designation of a keyword and a search period is made on one of terminal devices (10a to 10c), an index data searching unit (124b) in a WEB server (12) having a memory unit (123) searches a plurality of index data (123b) in the memory unit (12) using the keyword. If the number of hit index data exceeds a predetermined number, the index data are re-searched after shortening the search period. A sorting unit (124c) sorts the index data (123b) searched by the index searching unit (124b) by date.

FIG.1

**Description**

TECHNICAL FIELD

The present invention relates to a server, method, program, and terminal device for searching item data that store item data corresponding to items of newspaper and magazines in a memory unit, and when a search request identifying a keyword of the item data is received from a terminal device, search the item data corresponding to the keyword in the memory unit and output the searched item data to the terminal device. More particularly, the present invention relates to a server, a method, a computer program, and a terminal device for searching item data that reduces a delay in the processes due to sorting when the item data of newspapers and magazines are searched whereby enabling search of item data efficiently.

BACKGROUND ART

Item searching services to perform search of items of newspapers and magazines through the internet have been known. Conventionally, when a user sends a request, with a keyword, for a search for searching an item to an item search server, the item search server searches through the memory unit using the keyword, sorting all the hit item data by, for example, date, and provides a predetermined number of newest item data. In many cases, the predetermined number is set to about several tens cases that can be displayed in a window (page) on a display of the user.

All the hit data are sorted by, for example, date because new items of newspapers and magazines are constantly generated day by day and it is highly likely that a number of items that cannot be displayed on the display hit.

One example of the conventional technology to sort all the hit data is sorting all the cases that are hit in the database in the order of higher similarity as disclosed in Patent Document 1. This technology is widely adopted as disclosed in various patent documents other than Patent Document 1.

Patent Document 1: Japanese Patent Application Laid-Open Publication No. H09-73464

However, the process of sorting the entire hit item data and narrowing down the data to be provided by limiting to some newest item data from among the hit item data requires much time for the sorting, with the result that efficient searching cannot be performed.

Among the various processes the item search server carries out, such as session establishing, searching, and sorting, the most influenced by the number of item data is the sorting. The more the number of item data searched in the memory unit, the more the time required for sorting the item data and hence the more the delay in the sorting, leading to a decrease in the efficiency of the search. The processes other than the sorting do not take much time even if the number of the item data is large.

Accordingly, an object of the present invention is to provide a server, method, program, and terminal device for searching item data that reduces a delay in the processes due to sorting when the item data of newspapers and magazines are searched whereby enabling search of item data efficiently.

DISCLOSURE OF THE INVENTION

According to the present invention, a plurality of item data are searched in the memory unit using a keyword and when the number of the hit index data exceeds a predetermined number, a re-search of the item data is conducted after shortening the search period, and the hit or re-hit item data are sorted by date. Accordingly, the delay in the processes due to the sorting when the item data of newspapers, magazines and so on are hit can be reduced, thereby enabling an efficient search of the item data.

Moreover, according to the present invention, when a search request containing no search period in search conditions is received from a terminal device, item data having corresponding keywords are searched in the item data having date within a predetermined period, and if a number of the hit item data exceeds a predetermined number, a re-search of the item data is performed after shortening the predetermined period. Accordingly, when no search period is designated, a re-search is performed with appropriately shortening the search period and the delay in the processes that occurs when searching item data of newspapers, magazines and so on due to sorting can be reduced.

Furthermore, according to the present invention, when a search request containing a search period in search conditions is received from a terminal device, item data having corresponding keywords are searched in the item data having date within the search period, and if a number of the hit item data exceeds a predetermined number, a re-search of the item data is performed after shortening the search period. Accordingly, the re-search is performed with appropriately shortening the search period designated by the user and the delay in the processes that occurs when searching item data of newspapers, magazines and so on due to sorting can be reduced.

Moreover, according to the present invention, when the number of re-hit item data exceeds a predetermined number, re-search is repeated until the number of hit item data is less than the predetermined number after shortening the search period. Accordingly, the number of item data can be limited to maximum the predetermined number, so that the sorting can be accelerated.

Furthermore, according to the present invention, when the number of the hit item data exceeds a predetermined number, the search period is shortened by shifting the search start date based on the number of days of the search period, the number of the item data that can be displayed on the terminal device, and the number of the item data. Accordingly, the search start date can be flexibly and properly changed depending on the number of days of the search period, the number of the item data that can be displayed on the terminal device, and the number of the item data.

Moreover, according to the present invention, when the number of the hit item data exceeds a predetermined number, the search period is shortened by shifting the search end date based on the number of days of the search period, the number of the item data that can be displayed on the terminal device, and the number of the item data. Accordingly, the search end date can be flexibly and properly changed depending on the number of days of the search period, the number of the item data that can be displayed on the terminal device, and the number of the item data.

Furthermore, according to the present invention, a search request with designation of a keyword is made to the item data search server, which in response to the search request, searches a plurality of item data using the keyword, and when the number of the hit item data exceeds a predetermined number, re-searches the item data after shortening the search period, and results of the search are received and controlled for display by the terminal device. Accordingly, an appropriate number of the hit item data can be displayed on the terminal device.

BRIEF DESCRIPTION OF THE DRAWINGS

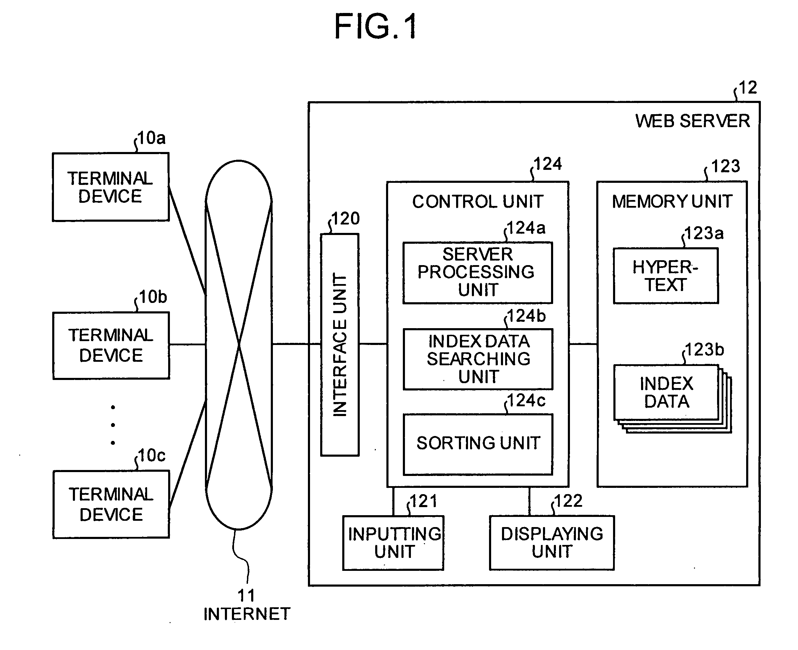

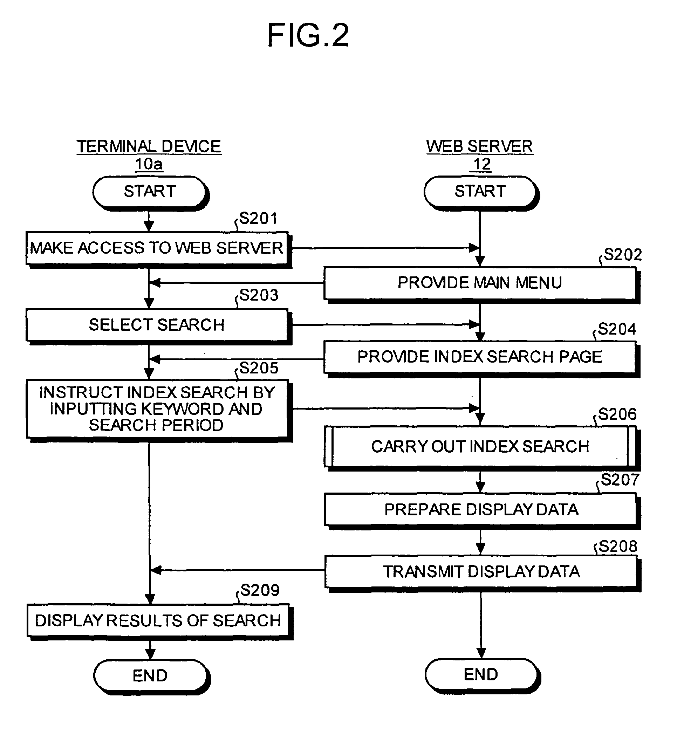

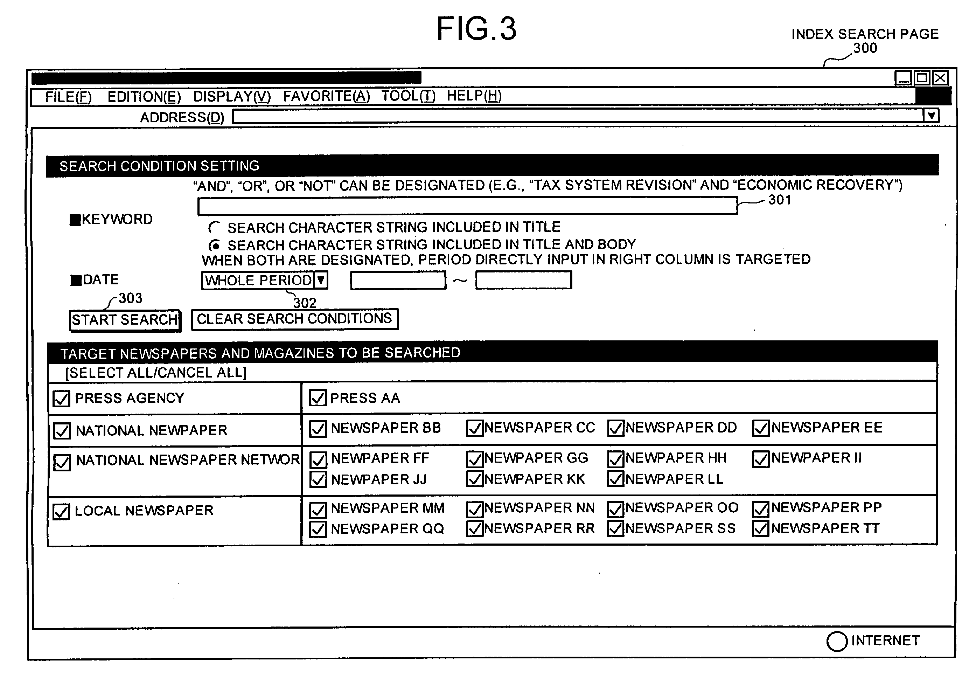

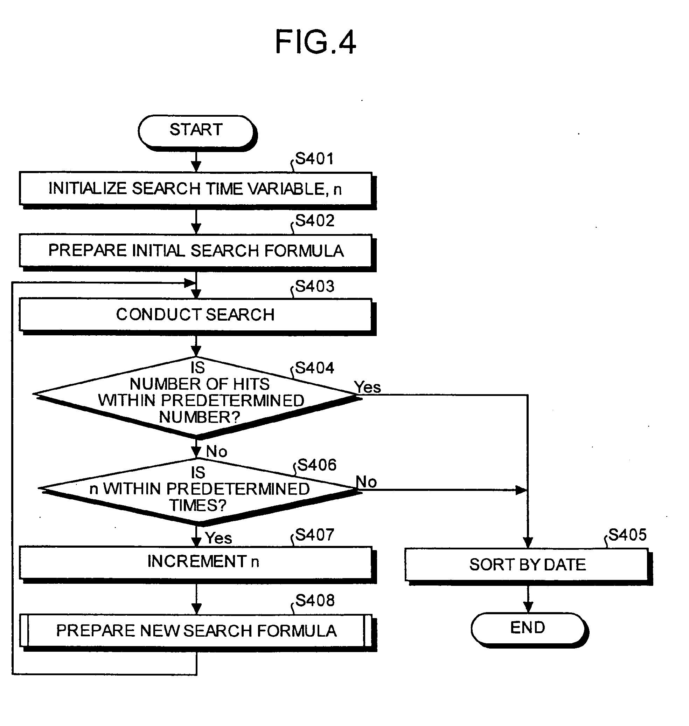

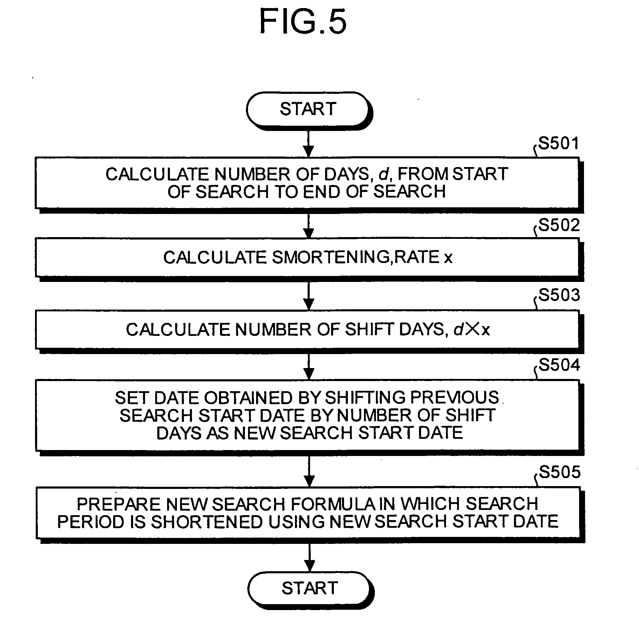

Fig. 1 is a block diagram of an item data searching system according to an embodiment of the present invention; Fig. 2 is a flowchart of the process procedures performed by a terminal device and a server shown in Fig. 1; Fig. 3 is a diagram of an example of an index search page; Fig. 4 is a detailed flow chart of an index search process shown in Fig. 2; and Fig. 5 is a detailed flowchart of preparing a narrowing down search formula shown in Fig. 4.

BEST MODE FOR CARRYING OUT THE INVENTION

Exemplary embodiments of a server, a method, program, and a terminal device for searching item data according to the present invention are explained in detail below with reference to the accompanying drawings. An embodiment of the present invention relates to an item data search system that operates on a World Wide Web (hereafter, WWW), which is one of distributed systems on the internet and the case in which indices of the items of newspapers and magazines are provided is explained.

First, the configuration of the item data search system according to the present embodiment is explained. Fig. 1 is a functional block diagram of the item data search system according to the present embodiment. The item data search system includes terminal devices 10a, 10b, and 10c and a WEB server 12. The terminal devices 10a to 10c and the WEB server 12 are connected through the Internet 11.

The terminal devices 10a to 10c are installed with a WEB browser capable of having access to a hypertext transport protocol (HTTP) server and can have access to various server devices on the Internet, for example, via internet service providers. More particularly, the terminal devices 10a to 10c have a function to request a search to the WEB server 12 for searching an index data of an item on which the keyword is designated. The WEB server 12 conducts a search for a plurality of index data using the keyword and when the number of the searched index data exceeds a predetermined number, conducts again a search for the item data after shortening the search period. The terminal devices 10a to 10c have a function to receive results of the search conducted by the WEB server 12 and display the result of the search. These functions are realized by a web browser.

The WEB server 12 is an HTTP server that is accessed by the various terminal devices 10a to 10c on the internet and provides a web service such as home page. The WEB server 12 provides not only a general web service but also stores index data of newspapers and magazines in the memory unit 123 and when the request for search is received from the terminal devices 10a to 10c with designation of the keyword is received, conducts a search for the item data corresponding to the keyword in the memory unit 123 and outputs the results of search to the terminal devices 10a to 10c.

More particularly, the WEB server 12 does not sort by date all the index data obtained by the search conducted using the keyword as is done in the conventional technology. Instead, the WEB server 12 conducts a search again after shortening the search period to reduce the number of indices when the number of index data searched exceeds a predetermined number, and then sorts the index data by date, thereby reducing the load of the sorting.

As shown in Fig. 1, the WEB server 12 includes an interface unit 120, an inputting unit 121, a displaying unit 122, a memory unit 123, and a control unit 124. The interface unit 120 is a network interface that transmits data to and receives data from the terminal devices 10a to 10c through the internet 11. More particularly, the interface unit 120 performs the process according to the TCP/IP protocol.

The inputting unit 121 is an inputting device, for example, a keyboard or a mouse. The displaying unit 122 is a display device such as a liquid crystal panel or display. The memory unit 123 is a memory device such as a hard disk device. The memory unit 12 stores hypertext 123a and index data 123b. The portion that stores the index data 123b forms a database for the items.

The hypertext 123a is a hypertext for forming a page screen image that is distributed to the terminal devices 10a to 10c. The index data 123b are index data of items of newspapers and magazines. The index data 123b are obtained on-line from the servers of newspaper publishers to which subscription has been made in advance or off-line using a medium such as a compact disk read only memory (CD-ROM).

The control unit 124 controls the whole system of the WEB server 12 that provides index data of items and includes a server processing unit 124a, an index data searching unit 124b, and a sorting unit 124c.

The server processing unit 124a provides the function of an HTTP server to the terminal devices 10a to 10c and more particularly, reads the hypertext 123a stored in the memory unit 123 when accessed by the terminal devices 10a to 10c and performs, for example, transmission process to transmit the read hypertext 123a to the corresponding terminal devices 10a to 10c.

The index data searching unit 124 conducts a search for a plurality of index data 123b in the memory unit 123 using the keyword and conducts a search again after shortening the search period when the number of searched index data exceeds the predetermined number. The reason that a reduction in the number of index data is performed by such a re-searching is that the greater the number of the index data the more delayed the sorting of the searched data by the sorting unit 124c.

More particularly, for example, a search period of two years is set in advance and when a request for search without designation of the search period is received from the terminal devices 10a to 10c, a search using the keyword is performed for a search period of 2 years. If the number of the hit index data exceeds the predetermined number, the date for starting the search and the date for ending the search are shifted based on the number of days in the search period (2 years = 730 days), the number of index data that can be displayed on the terminal devices 10a to 10c, and the number of hit index data to restrict the search period, and then a search is conducted again. If the number of the hit index data by this re-search exceeds the predetermined number, a re-search is conducted after shortening the search period in a similar manner. When a request for a search with designation of the search period is received and if the number of the hit index data exceeds the predetermined number, a re-search is conducted after shortening the search period in a similar manner.

The sorting unit 124c sorts by date the hit index data searched by the index data searching unit 124b. Since the index data searching unit 124b controls the number of the index data, the sorting unit 124c need not sort a large number of the index data. The sorted index data 123b are output as a hypertext to the terminal devices 10a to 10c through the server processing unit 124c.

The process procedure performed between the terminal device 10a and the WEB server 12 is explained in detail. Fig. 2 is a flowchart of the process procedure performed between the terminal device 10a and the WEB server 12 shown in Fig. 1.

When a WEB browser is booted on the terminal device 10a and access is made to the WEB server 12 through the internet 11 (step S201), the WEB browser 12 prepares a main menu (not shown) (step S202), and displays the main menu on the terminal device 10a.

When a search for index is selected on the main menu (step S203), the selection is notified to the WEB server 12 and the WEB server 12 provides an index search page (step S204). The index search page is displayed on the terminal device 10a. Fig. 3 is an exemplary index search page 300 that includes a region for setting search conditions, having a keyword inputting frame 301, a date inputting frame 302, and a button 303 for instructing start of search.

When a user inputs a keyword and a search period on the index search page 300 to instruct start of the index search (step S205), the searching unit 124b of the WEB server 12 carries out an index search (step S206). When the user inputs no search period, the index search is carried out by setting a predetermined period (for example, two years) as the search period. If the number of the hit index exceeds a predetermined number, a re-search is carried out by shortening the search period.

Display data is prepared based on the results of the index search (step S206), the prepared display data is transmitted to the terminal device 10a (step S208), and the display data is displayed on the terminal device 10a as the result of the search.

The process procedure for carrying out the index search shown in the Step S206 in Fig. 2 is explained in more detail. Fig. 4 is a detailed flowchart of the process procedure for carrying out the index search shown in the Step S206 in Fig. 2.

The index data searching unit 124b of the WEB server 12 is first initialized to set a variable, n, that indicates the times of search to 0 (zero) (step S401), prepares an initial search formula based on the keywords designated by the terminal devices 10a to 10c (step S402), and conducts a search to search the index data 123b in the memory unit 123 using the initial search formula (step S403).

The index data searching unit 124b examines whether the number of hits of the index data (number of index data) is less than a predetermined number (step S404). If the number of hits of the index data is less than the predetermined number (step S404, yes), the sorting unit 124c sorts the hit index data 123b by date (step S405).

When the number of hits exceeds the predetermined number (step S404, No), the sorting unit 124c examines whether the variable, n, is less than a predetermined times (step S406). If the number of hits exceeds the predetermined times (step S406, No), the sorting unit 124c sorts the index data 123 hit using the initial search formula by date (step S405). That is, in this case, there is a possibility that too much time is required for restriction due to repeated process, so that the repetition is stopped after a predetermined number of times of repetition and the sorting is carried out on the results of initial search.

If the variable, n, is less than the predetermined times (step S406, Yes), the variable, n, is incremented (step S407), and a new search formula in which the search period is shortened is prepared (step S408), and system control is passed to step S403.

The process procedure for preparing the new search formula shown in step S408 in Fig. 4 is explained below in more detail. Fig. 5 is a detailed flowchart of the process procedure for preparing the new search formula shown in step S408 in Fig. 4.

The index data searching unit 124b of the WEB server 12 calculates the number of days from the start of the search to the end of the search (step S501), and calculates a shortening rate, x (step S502).

The index data searching unit 124b then calculates a product $(d \times x)$ of the number of days, d, and the shortening rate, x, as a number of shift days (step S503), and sets a date obtained by shifting the previous search start date by the number of shift days as new search start date (step S504). The index data searching unit 124b prepares a restricted search formula in which the search period is shortened using the new search start date (step S505).

In this manner, the number of index data can be reduced to be less than the predetermined number before the sorting by the sorting unit 124c is carried out. This reduces the time required for the sorting and hence a delay in the processes.

A specific algorithm used when the present invention is carried out using a program is explained. The following assumptions are made. "X" designates a coefficient (1 or more) relating to a restricted maximum number of hits; "Y" designates a coefficient (1 or more) relating to restriction of the search period; "pos" designates a display start position; "max" designates a number of displayed items; "start" designates a search start date; "end" designates a search end date; "keyquery" designates a search formula disregarding the search period; "n" designates a number of times of restricted search; "query(n)" designates a search formula when an n-th time search is conducted; "hits(n)" designates a number of hits when a search is conducted using the query(n); "start(n)" designates a search start date when an n-th time restricted search is conducted; and "end(n)" designates a search end date when an n-th time restricted search ends.

When an initial search formula is prepared,

start(0) = start,
end(0) = end,
query(0) = keyquery AND "item date > start(0)" AND "item date < end(0)".

When a new search formula is prepared by shifting the search start date,

date obtained by subtracting {(a difference between end(n-1) and start(n-1) $\times$ (max + pos)/hits(n-1) $\times$ Y} from start (n) = end(n-1)

end(n) = end(n-1)
if start > start(n), then start(n) = start
if end < end(n-1), then end(n) = end
If end < end(n), then end(n) = end
query (n) keyquery AND "item date > start(n)" AND "item date < end(n)".

When a new search formula in which restriction is performed by shifting the search end date,

start(n) - start(n-1)
date obtained by adding {(a difference between end (n-1) and start(n-1) $\times$ (max + pos)/hits(n-1) $\times$ Y} to end (n) = start(n-1)
If start > start(n), then start(n) = start
If end < end(n), then end(n) =end
query(n) =keyquery AND "item date > start(n)" AND "item date <end(n)".

A specific example of judgment of number of hits when the above-mentioned formula is used and date of re-search is explained in more detail. Assumptions are made as follows. The search start date is January 1, 2001 and the search end date is January 1, 2003. The initial number of hits is 5,000. The tuning parameter X for judging number of hits is set 20 folds and the tuning parameter Y for shifting the number of days is 5 folds. When the period is restricted, the search end date is shifted.

Judging number of hits,

$$(max + pos) \times X = (20 + 0) \times 20 = 400$$

is obtained. Since 400 < 5,000, a period shortening process is carried out.

Since the number of days, d, from the search start date to the search end date = 730 days,

$$d \times x = 730 \times (730 \times (20/5,000) = 3 \text{ days.}$$

Therefore, the search end date is after $(d \times x) \times Y = 3 \times 5 = 15$ days from January 1, 2003, i.e., December 18, 2001. Accordingly, when a re-search is carried out, the re-search is carried out for a shortened search period of from January 1, 2001 to December 18, 2002.

When a request for a search with designating a keyword and a search period on the terminal devices 10a to 10c is made, the index data searching unit 124b of the WEB server 12 searches a plurality of index data 123b in the memory unit 123 using the keyword. When the number of the hit index data exceeds the predetermined number, a re-search is conducted after shortening the search period and the sorting unit 124c sorts by date the index data 123b hit by the index data searching unit 124b. Accordingly, the delay due to sorting when index data of items in newspapers and magazines and so on can be reduced, thereby enabling an efficient search of the item data.

In the above, the present invention is applied to the case where WWW on the Internet is used. However, the present invention is not limited to this and may be realized by using an exclusive use network.

Moreover, in the above, the case where index data of newspapers and magazines are target for search is explained. However, the present invention is not limited to this and may be applied to the case where the item data themselves are searched.

Furthermore, in the above, the case where repeated restrictions are performed by re-searching is explained. However, the present invention is not limited to this and may be applied to the case where a research is conducted with broadening the search period when the number of hits is small.

According to the present invention, a plurality of item data are searched in the memory unit using a keyword and when the number of the hit index data exceeds a predetermined number, a re-search of the item data is conducted after shortening the search period, and the hit or re-hit item data are sorted by date. Accordingly, the delay in the processes due to the sorting when the item data of newspapers, magazines and so on are hit can be reduced, thereby enabling an efficient search of the item data.

According to the present invention, when a search request containing no search period in search conditions is received from a terminal device, item data having corresponding keywords are searched in the item data having date within a predetermined period, and if a number of the hit item data exceeds a predetermined number, a re-search of the item data is performed after shortening the predetermined period. Accordingly, when no search period is designated, a re-search is performed with appropriately shortening the search period and the delay in the processes that occurs when searching item data of newspapers, magazines and so on due to sorting can be reduced.

According to the present invention, when a search request containing a search period in search conditions is received from a terminal device, item data having corresponding keywords are searched in the item data having date within the search period, and if a number of the hit item data exceeds a predetermined number, a re-search of the item data is performed after shortening the search period. Accordingly, the re-search is performed with appropriately shortening the search period designated by the user and the delay in the processes that occurs when searching item data of newspapers, magazines and so on due to sorting can be reduced.

According to the present invention, when the number of re-hit item data exceeds a predetermined number, re-search is repeated until the number of hit item data is less than the predetermined number after shortening the search period. Accordingly, the number of item data can be limited to maximum the predetermined number, so that the sorting can be accelerated.

According to the present invention, when the number of the hit item data exceeds a predetermined number, the search period is shortened by shifting the search start date based on the number of days of the search period, the number of the item data that can be displayed on the terminal device, and the number of the item data. Accordingly, the search start date can be flexibly and properly changed depending on the number of days of the search period, the number of the item data that can be displayed on the terminal device, and the number of the item data.

According to the present invention, when the number of the hit item data exceeds a predetermined number, the search period is shortened by shifting the search end date based on the number of days of the search period, the number of the item data that can be displayed on the terminal device, and the number of the item data. Accordingly, the search end date can be flexibly and properly changed depending on the number of days of the search period, the number of the item data that can be displayed on the terminal device, and the number of the item data.

According to the present invention, a search request with designation of a keyword is made to the item data search server, which in response to the search request, searches a plurality of item data using the keyword, and when the number of the hit item data exceeds a predetermined number, re-searches the item data after shortening the search period, and results of the search are received and controlled for display by the terminal device. Accordingly, an appropriate number of the hit item data can be displayed on the terminal device.

INDUSTRIAL APPLICABILITY

The server, method, program, and terminal device for searching item data according to the present invention can reduce a delay in processes when searching item data of newspapers, magazines and so on due to sorting of the item data and is suitable for efficiently searching the item data.

**Claims**

1. A server for searching item data, comprising:

   a memory unit that stores item data corresponding to items of newspapers and magazines;
   a searching unit that searches a plurality of item data in the memory unit when a search request requesting a search for item data in with designation of a keyword corresponding to the item data is received from a terminal device, and if number of hit item data exceeds a predetermined number, re-searches the hit item data after shortening a search period; and
   a sorting unit that sorts the hit item data or re-hit item data obtained by the searching unit by date.

2. The server according to claim 1, wherein when the search request received from the terminal device contains no search period in search conditions, the searching unit searches the item data having the designated keyword out of the item data with dates within a predetermined period, and if number of hit item data exceeds a predetermined number, re-searches the hit item data after shortening the predetermined period.

3. The server according to claim 1, wherein when the search request received from the terminal device contains a search period in the search conditions, the searching unit searches the item data having the keyword out of the item data having dates within the search period.

4. The server according to claim 1, wherein when a number of the re-searched item data exceeds a predetermined number, the searching unit repeatedly re-searches after shortening the search period until the number of the re-searched item data is under the predetermined number.

5. The server according to claim 1, wherein when the number of the searched item data exceeds the predetermined number, the searching unit shortens the search period by shifting a search start date based on a number of days of the search period, a number of the item data that can be displayed on the terminal device, and the number of the item data.

6. The server according to claim 1, wherein when the number of the searched item data exceeds the predetermined number, the searching unit shortens the search period by shifting a search end date based on a number of days of the search period, a number of the item data that can be displayed on the terminal device, and the number of the item data.

7. A method for searching comprising:

   searching a plurality of item data from a memory unit that stores item data corresponding to items of newspapers and magazines when a search request requesting a search for item data in with designation of a keyword corresponding to the item data is received from a terminal device, and if number of hit item data exceeds a predetermined number, re-searching the hit item data after shortening a search period; and
   sorting the hit item data or re-hit item data obtained by the searching unit by date.

8. The method according to claim 7, wherein when the search request received from the terminal device contains no search period in search conditions, the searching includes searching the item data having the designated keyword out of the item data with dates within a predetermined period, and if number of hit item data exceeds a predetermined number, re-searches the hit item data after shortening the predetermined period.

9. The method according to claim 7, wherein when the search request received from the terminal device contains a search period in the search conditions, the searching includes searching the item data having the keyword out of the item data having dates within the search period.

10. The method according to claim 7, wherein when a number of the re-searched item data exceeds a predetermined number, the searching includes repeatedly re-searching after shortening the search period until the number of the re-searched item data is under the predetermined number.

11. The method according to claim 7, wherein when the number of the searched item data exceeds the predetermined number, the searching includes shortening the search period by shifting a search start date based on a number of days of the search period, a number of the item data that can be displayed on the terminal device, and the number of the item data.

12. The method according to claim 7, wherein when the number of the searched item data exceeds the predetermined number, the searching includes shortening the search period by shifting a search end date based on a number of days of the search period, a number of the item data that can be displayed on the terminal device, and the number of the item data.

13. A computer program that causes a computer to execute:

searching a plurality of item data from a memory unit that stores item data corresponding to items of newspapers and magazines when a search request requesting a search for item data in with designation of a keyword corresponding to the item data is received from a terminal device, and if number of hit item data exceeds a predetermined number, re-searching the hit item data after shortening a search period; and sorting the hit item data or re-hit item data obtained by the searching unit by date.

**14.** The computer program according to claim 13, wherein when the search request received from the terminal device contains no search period in search conditions, the searching includes searching the item data having the designated keyword out of the item data with dates within a predetermined period, and if number of hit item data exceeds a predetermined number, re-searches the hit item data after shortening the predetermined period.

**15.** The computer program according to claim 13, wherein when the search request received from the terminal device contains a search period in the search conditions, the searching includes searching the item data having the keyword out of the item data having dates within the search period.

**16.** The computer program according to claim 13, wherein when a number of the re-searched item data exceeds a predetermined number, the searching includes repeatedly re-searching after shortening the search period until the number of the re-searched item data is under the predetermined number.

**17.** The computer program according to claim 13, wherein when the number of the searched item data exceeds the predetermined number, the searching includes shortening the search period by shifting a search start date based on a number of days of the search period, a number of the item data that can be displayed on the terminal device, and the number of the item data.

**18.** The computer program according to claim 13, wherein when the number of the searched item data exceeds the predetermined number, the searching includes shortening the search period by shifting a search end date based on a number of days of the search period, a number of the item data that can be displayed on the terminal device, and the number of the item data.

**19.** A terminal device for searching item data that communicates with a server for searching item data having a memory unit storing item data corresponding to item data of newspapers and magazines, comprising:

a search requesting unit that sends a request for a search with a keyword to the server; a search result receiving unit that receives results of a search conducted by the server, wherein in response to the search request from the search requesting unit, the server searches a plurality of item data in the memory in the server using the keyword, and if a number of the hit item data exceeds a predetermined number, re-searches the hit item data after shortening a search period; and a displaying unit that displays the results of the search received by the search result receiving unit,.

# FIG.1

TERMINAL DEVICE 10a

TERMINAL DEVICE 10b

TERMINAL DEVICE 10c

11 INTERNET

12 WEB SERVER

INTERFACE UNIT 120

CONTROL UNIT 124

SERVER PROCESSING UNIT 124a

INDEX DATA SEARCHING UNIT 124b

SORTING UNIT 124c

MEMORY UNIT 123

HYPER-TEXT 123a

INDEX DATA 123b

INPUTTING UNIT 121

DISPLAYING UNIT 122

EP 1 550 955 A1

# FIG.2

TERMINAL DEVICE
10a

WEB SERVER
12

START

START

S201
MAKE ACCESS TO WEB SERVER

S202
PROVIDE MAIN MENU

S203
SELECT SEARCH

S204
PROVIDE INDEX SEARCH PAGE

S205
INSTRUCT INDEX SEARCH BY INPUTTING KEYWORD AND SEARCH PERIOD

S206
CARRY OUT INDEX SEARCH

S207
PREPARE DISPLAY DATA

S208
TRANSMIT DISPLAY DATA

S209
DISPLAY RESULTS OF SEARCH

END

END

# FIG.3

INDEX SEARCH PAGE
300

---

FILE(F)   EDITION(E)   DISPLAY(V)   FAVORITE(A)   TOOL(T)   HELP(H)

ADDRESS(D) [_____] ▼

## SEARCH CONDITION SETTING

"AND", "OR", OR "NOT" CAN BE DESIGNATED (E.G., "TAX SYSTEM REVISION" AND "ECONOMIC RECOVERY")

■KEYWORD     [_____] 301

　　　　　　　○ SEARCH CHARACTER STRING INCLUDED IN TITLE
　　　　　　　● SEARCH CHARACTER STRING INCLUDED IN TITLE AND BODY
　　　　　　　WHEN BOTH ARE DESIGNATED, PERIOD DIRECTLY INPUT IN RIGHT COLUMN IS TARGETED

■DATE        [WHOLE PERIOD ▼]   [_____] ～ [_____]
　　303                          302
[START SEARCH]  [CLEAR SEARCH CONDITIONS]

## TARGET NEWSPAPERS AND MAGAZINES TO BE SEARCHED

[SELECT ALL/CANCEL ALL]

| ☑ PRESS AGENCY | ☑ PRESS AA | | | |
|---|---|---|---|---|
| ☑ NATIONAL NEWPAPER | ☑ NEWSPAPER BB | ☑ NEWSPAPER CC | ☑ NEWSPAPER DD | ☑ NEWSPAPER EE |
| ☑ NATIONAL NEWSPAPER NETWOR | ☑ NEWPAPER FF  ☑ NEWPAPER JJ | ☑ NEWPAPER GG  ☑ NEWPAPER KK | ☑ NEWPAPER HH  ☑ NEWPAPER LL | ☑ NEWPAPER II |
| ☑ LOCAL NEWSPAPER | ☑ NEWSPAPER MM  ☑ NEWSPAPER QQ | ☑ NEWSPAPER NN  ☑ NEWSPAPER RR | ☑ NEWSPAPER OO  ☑ NEWSPAPER SS | ☑ NEWSPAPER PP  ☑ NEWSPAPER TT |

○ INTERNET

EP 1 550 955 A1

# FIG.4

START

S401
INITIALIZE SEARCH TIME VARIABLE, n

S402
PREPARE INITIAL SEARCH FORMULA

S403
CONDUCT SEARCH

S404
IS NUMBER OF HITS WITHIN PREDETERMINED NUMBER? — Yes

No

S406
IS n WITHIN PREDETERMINED TIMES? — No

Yes
S407
INCREMENT n

S408
PREPARE NEW SEARCH FORMULA

S405
SORT BY DATE

END

# FIG.5

```
                    ┌─────────────┐
                    │    START    │
                    └─────────────┘
                           │
                           ▼                              ⌐S501
   ┌──────────────────────────────────────────────────────┐
   │   CALCULATE NUMBER OF DAYS, d, FROM START            │
   │        OF SEARCH TO END OF SEARCH                     │
   └──────────────────────────────────────────────────────┘
                           │
                           ▼                              ⌐S502
   ┌──────────────────────────────────────────────────────┐
   │           CALCULATE SMORTENING,RATE x                 │
   └──────────────────────────────────────────────────────┘
                           │
                           ▼                              ⌐S503
   ┌──────────────────────────────────────────────────────┐
   │        CALCULATE NUMBER OF SHIFT DAYS, d×x            │
   └──────────────────────────────────────────────────────┘
                           │
                           ▼                              ⌐S504
   ┌──────────────────────────────────────────────────────┐
   │   SET DATE OBTAINED BY SHIFTING PREVIOUS             │
   │   SEARCH START DATE BY NUMBER OF SHIFT               │
   │      DAYS AS NEW SEARCH START DATE                    │
   └──────────────────────────────────────────────────────┘
                           │
                           ▼                              ⌐S505
   ┌──────────────────────────────────────────────────────┐
   │   PREPARE NEW SEARCH FORMULA IN WHICH SEARCH         │
   │   PERIOD IS SHORTENED USING NEW SEARCH START DATE    │
   └──────────────────────────────────────────────────────┘
                           │
                           ▼
                    ┌─────────────┐
                    │    START    │
                    └─────────────┘
```

## INTERNATIONAL SEARCH REPORT

| | International application No. |
|---|---|
| | PCT/JP03/02997 |

| A. CLASSIFICATION OF SUBJECT MATTER |
|---|
| Int.Cl$^7$ G06F17/30 |

According to International Patent Classification (IPC) or to both national classification and IPC

| B. FIELDS SEARCHED |
|---|
| Minimum documentation searched (classification system followed by classification symbols) |
| Int.Cl$^7$ G06F17/30 |

Documentation searched other than minimum documentation to the extent that such documents are included in the fields searched

| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)
JICST FILE

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 8-235160 A (Canon Inc.), 13 September, 1996 (13.09.96), Full text; all drawings (Family: none) | 1-19 |
| Y | JP 6-223117 A (Nippon Telegraph And Telephone Corp.), 12 August, 1994 (12.08.94), Full text; all drawings (Family: none) | 1-19 |
| Y | Motomasa DAIGO, Nobuyuki NAKAJIMA, Hiroko Han'nya, "Kensaku Joken no Jido Henko o Kumikonda Shohin Konyu Shien System no Kochiku", Journal of Japan Society for Fuzzy Theory and Systems, Japan, Japan Society for Fuzzy Theory and Systems, 15 April, 1995 (15.04.95), Vol.7, No.2, pages 380 to 389 | 1-19 |

| ☒ Further documents are listed in the continuation of Box C. | ☐ See patent family annex. |

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 12 June, 2003 (12.06.03) | 01 July, 2003 (01.07.03) |

| Name and mailing address of the ISA/ Japanese Patent Office | Authorized officer |
|---|---|
| Facsimile No. | Telephone No. |

Form PCT/ISA/210 (second sheet) (July 1998)

**INTERNATIONAL SEARCH REPORT**

International application No.

PCT/JP03/02997

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-140364 A (Seiko Epson Corp.), 17 May, 2002 (17.05.02), Full text; all drawings (Family: none) | 1-19 |
| Y | JP 11-195039 A (Toshiba Corp.), 21 July, 1999 (21.07.99), Full text; all drawings (Family: none) | 1-19 |
| Y | JP 9-73464 A (Fujitsu Ltd.), 18 March, 1997 (18.03.97), Full text; all drawings (Family: none) | 1-19 |

Form PCT/ISA/210 (continuation of second sheet) (July 1998)